# FASCICULE DE BREVET EUROPEEN

(11) **EP 3 999 380 B1**
(45) Date de publication et mention de la délivrance du brevet: **04.09.2024**
(21) Numéro de dépôt: 20737024.8
(22) Date de dépôt: 10.07.2020
(51) Int. Cl.: B60Q 1/068, F21S 41/60, F21S 41/33

(54) **DISPOSITIF LUMINEUX POUR VÉHICULE AUTOMOBILE**
BELEUCHTUNGSVORRICHTUNG FÜR EIN KRAFTFAHRZEUG
LIGHTING DEVICE FOR A MOTOR VEHICLE

(30) Priorité: 15.07.2019 FR 1907912
(43) Date de publication de la demande: 25.05.2022
(73) Titulaire: Valeo Vision, 93012 Bobigny Cedex (FR)
(72) Inventeur: COLOMBEL, Jean-Marc, 49000 ANGERS (FR); HERMITTE, Michel, 49000 ANGERS (FR); GIRAUD, Sylvain, 49000 ANGERS (FR)
(74) Mandataire: Valeo Visibility
(86) Numéro de dépôt international: PCT/EP2020/069469
(87) Numéro de publication internationale: WO 2021/009018

(56) Documents cités:
- EP-A1- 3 299 700
- FR-A1- 2 760 069
- FR-A1- 2 853 717
- JP-A- 2009 283 417
- US-A1- 2015 204 503
- US-A1- 2017 120 799
- US-A1- 2018 312 103

## Description

L'invention a trait au domaine de l'éclairage et/ou de la signalisation lumineuse dans le domaine automobile, et plus particulièrement aux systèmes de réglage de la position de modules lumineux d'un dispositif lumineux pour véhicule automobile.

Le domaine de l'éclairage et/ou de la signalisation lumineuse des véhicules automobiles est soumis à une réglementation qui impose que chaque véhicule automobile soit équipé de feux, remplissant des fonctions spécifiques de sécurité, et notamment des feux de route et des feux de croisement. Les feux de croisement permettent à un véhicule automobile d'être vu des autres usagers et à son conducteur de voir convenablement la chaussée jusqu'à 30 mètres, sans éblouir les usagers présents sur la scène de route. Les feux de route émettent des faisceaux lumineux plus intenses pour que le conducteur du véhicule automobile puisse voir convenablement la chaussée, à au moins 100 mètres en condition de nuit.

Il est connu que les feux de croisement et les feux de route soient respectivement mis en oeuvre par un module lumineux, et chaque module lumineux peut comprendre une source lumineuse essentiellement ponctuelle, par exemple de type diode électroluminescente, et un collecteur, qui comporte une surface réfléchissante de révolution avec un profil elliptique. La source lumineuse est alors située au niveau d'un premier foyer de la surface réfléchissante en étant orientée de manière à éclairer essentiellement en direction de ladite surface. Les rayons lumineux sont réfléchis de manière convergente vers un deuxième foyer de la surface réfléchissante du collecteur, confondu avec un foyer d'un système optique du module lumineux, tel qu'une lentille, configuré pour projeter un faisceau lumineux réfléchi par le collecteur vers la chaussée.

Au sein d'un véhicule automobile, les modules lumineux permettant la mise en oeuvre des feux de croisement et des feux de route peuvent être regroupés dans un même dispositif lumineux disposé en face avant d'un véhicule automobile, notamment pour faciliter la réalisation d'une continuité optique lors du passage des feux de croisement aux feux de route. Lorsque le dispositif lumineux est monté sur un véhicule automobile, il est nécessaire de régler précisément l'orientation de chaque module lumineux, d'une part l'un indépendamment de l'autre afin de s'assurer que le faisceau lumineux projeté par chaque module lumineux éclaire correctement la route conformément à la réglementation, et d'autre part l'un par rapport à l'autre afin de s'assurer que le passage d'un feu à l'autre soit le plus fluide possible. Il est connu pour cela de recourir à des systèmes de réglage permettant de contrôler le pivotement du module lumineux selon différents directions.

De tels dispositifs lumineux présentent néanmoins l'inconvénient de comprendre des systèmes de réglage complexes et volumineux dont le réglage peut être délicat. La demande de brevet EP 3 299 700 A1 décrit un dispositif lumineux selon le préambule de la revendication 1.

L'invention s'inscrit dans ce contexte et propose un dispositif lumineux, notamment pour véhicule automobile, comprenant au moins deux modules lumineux, et au moins un organe de support porteur desdits modules lumineux, chaque module lumineux comportant au moins une source lumineuse apte à émettre des rayons lumineux et un système optique disposé, sur un axe optique spécifique du module lumineux, en travers des rayons lumineux et configuré pour projeter un faisceau lumineux, l'organe de support porteur des différents modules lumineux est d'une part solidaire d'un élément de fermeture intégrant au moins deux systèmes optiques et d'autre part relié à au moins un premier système de réglage permettant le déplacement indépendant de l'un des modules lumineux par rapport à au moins l'autre module lumineux.

Selon l'invention, l'organe de support présente la forme d'un boîtier ouvert, muni de parois latérales opaques et recouvert d'une vitre de protection, la vitre de protection étant réalisée dans un premier matériau, transparent et optiquement neutre, et la vitre de protection comprenant au moins les systèmes optiques d'au moins deux modules lumineux distincts, les systèmes optiques consistant en des lentilles de projection minces réalisées dans un deuxième matériau, distinct du premier matériau de la vitre de protection.

En d'autres termes, la présente invention propose un dispositif lumineux présentant une architecture compacte, notamment parce qu'il comprend un système optique tel qu'une lentille de projection mince, le cas échéant en étant dépourvu de glace externe de protection, cette architecture compacte permettant l'intégration dans le dispositif, au niveau de l'organe de support, d'un système de réglage indépendant de la position d'un module lumineux par rapport à l'autre.

Par module lumineux, il convient de comprendre une unité d'éclairage comportant au moins la source lumineuse et le système optique disposé sur le trajet des rayons émis par la source lumineuse. Un tel module lumineux peut comporter un collecteur, en direction duquel la source lumineuse émet ses rayons. Le collecteur est notamment équipé d'une surface réfléchissante configurée pour dévier les rayons lumineux émis par la source lumineuse en direction du système optique.

Dans la présente invention, le collecteur présente une forme elliptique ou parabolique, un collecteur elliptique permettant, avantageusement de réduire la hauteur du système optique, consistant par exemple en une lentille de projection mince, ménagé sur sa trajectoire.

Selon une caractéristique de l'invention, le système optique est configuré pour projeter une image de la surface réfléchissante du collecteur. En d'autres termes, l'image projetée sur la scène de route par le dispositif lumineux consiste en une imagerie directe du collecteur et la forme de celui-ci influe sur l'image projetée sur la scène de route. Dans ce contexte,

le collecteur peut être configuré afin de présenter un bord d'extrémité au voisinage de la source lumineuse au profil spécifique, qui participe à donner à l'image projetée un profil approprié, et notamment une coupure appropriée, pour la réalisation d'une fonction optique souhaitée.

Le bord d'extrémité du collecteur au voisinage de la source lumineuse peut notamment être découpé de manière à présenter un profil en marche d'escalier, la forme particulière de ce bord participant à former une coupure en marche d'escalier dans le faisceau lumineux que le collecteur participe à générer par déviation des rayons émis par la source à travers le système optique.

La source lumineuse peut être du type à semi-conducteur et peut consister en au moins une diode électroluminescente (abrégée LED pour l'anglais « light-emitting diode ») ménagée au niveau d'un premier foyer du collecteur du module.

Tel que cela a été précisé, le dispositif lumineux comprend un élément de fermeture intégrant plusieurs systèmes optiques et un organe de support solidaire de cet élément de fermeture.

Plus particulièrement, l'élément de fermeture est au moins en partie transparent, et il est configuré pour intégrer les systèmes optiques d'au moins deux modules lumineux du dispositif lumineux. Par intégrer les systèmes optiques, on comprend aussi bien une configuration dans laquelle l'élément de fermeture intègre les systèmes optiques, c'est-à-dire qu'il est réalisé d'un seul tenant avec les systèmes optiques, ou bien une configuration dans laquelle l'élément de fermeture porte les systèmes optiques, c'est-à-dire que les systèmes optiques sont rapportés sur l'élément de fermeture. L'élément de fermeture et les systèmes optiques peuvent ainsi être réalisés dans des matériaux identiques, par exemple en polyméthacrylate de méthyle (PMMA) ou en polycarbonate (PC), ou l'élément de fermeture peut être analogue à une vitre de protection et être réalisé dans un matériau neutre tel que du verre ou des polymères synthétiques comme du polycarbonate PC ou du polyétherimide PEI, afin de porter les systèmes optiques qui peuvent eux être réalisés en polyméthacrylate de méthyle (PMMA).

L'organe de support peut présenter la forme d'une plaque, d'une platine ou d'un boîtier ouvert sur au moins un côté, et cet organe de support, solidaire de l'élément de fermeture, est configuré pour porter les différents modules lumineux. L'organe de support et l'élément de fermeture délimitent ainsi, de manière sensiblement étanche, un premier volume dans lequel s'étendent les modules lumineux.

Chaque système optique consiste en une lentille de projection et, plus spécifiquement dans le cadre d'un dispositif lumineux compact, en une lentille de projection mince, présentant une épaisseur qui peut être inférieure à 7mm, et par exemple de l'ordre de 6mm. Afin de réduire l'encombrement du dispositif lumineux, le système optique de la présente invention est particulièrement disposé à proximité de la source lumineuse et le cas échéant à proximité du collecteur du module correspondant. A titre d'exemple, lorsque le collecteur présente une forme elliptique, le système optique peut être interposé entre le premier foyer et le deuxième foyer dudit collecteur.

Dans ce contexte de dispositif lumineux à faible encombrement, avec un système optique agencé au plus près de la source lumineuse, et notamment interposé entre les deux foyers du collecteur, les inventeurs ont pu constater qu'un réglage indépendant des modules les uns par rapport aux autres est possible par translation.

Selon une caractéristique de l'invention, et afin d'orienter spécifiquement le faisceau lumineux du module lumineux pour qu'il traverse le système optique correspondant, la position d'au moins le module lumineux peut être réglée par un premier système de réglage particulier en ce qu'il génère une translation selon une unique composante directionnelle, perpendiculaire à l'axe optique du module lumineux. Plus particulièrement, le premier système de réglage d'au moins l'un des modules lumineux comporte des moyens de guidage en translation du module lumineux par rapport à l'organe de support selon un mouvement de translation le long d'un axe perpendiculaire à l'axe optique correspondant.

Le module lumineux est ainsi déplacé par rapport à l'élément de fermeture, mais également par rapport à l'organe de support et au moins l'autre module lumineux selon un mouvement de translation le long d'un axe perpendiculaire à l'axe optique.

Selon une caractéristique de l'invention, chaque module lumineux est monté sur l'organe de support via un premier système de réglage comportant des moyens de guidage en translation du module lumineux par rapport à l'organe de support, le dispositif lumineux étant configuré de sorte que les moyens de guidage en translation soient orientés selon des directions différentes. Par orienté selon une direction déterminée, on comprend que les moyens de guidage en translation sont configurés pour que le module lumineux correspondant se déplace de façon unidirectionnelle le long de cette direction déterminée. En d'autres termes, chaque module lumineux est équipé d'un premier système de réglage par translation susceptible de permettre son déplacement par rapport au système optique qui lui est propre, par rapport à l'organe de support et par rapport à l'autre module lumineux, et un premier module lumineux est susceptible d'être déplacé selon une première direction perpendiculaire à l'axe optique, par exemple une direction transversale tandis qu'un deuxième module lumineux est susceptible d'être déplacé selon une deuxième direction perpendiculaire à l'axe optique, par exemple une direction verticale.

Selon une caractéristique de l'invention, chaque premier système de réglage comporte, outre les moyens de guidage en translation du module lumineux par rapport à l'organe de support, d'une part des moyens d'arrêt en position ainsi que des moyens de réglage du déplacement en translation du module lumineux.

Selon une caractéristique de l'invention, les moyens d'arrêt en position et les moyens de réglage comportent au moins un élément oblong et un élément circulaire respectivement formés sur l'un ou l'autre du module lumineux et de l'organe de support et disposés en regard, l'élément oblong des moyens d'arrêt en position s'étendant selon une direction sensiblement perpendiculaire à la direction selon laquelle s'étend l'élément oblong des moyens de réglage.

Les moyens de guidage en translation du premier système de réglage peuvent consister en un système à glissières, formées par exemple par la coopération de rails agencés sur l'organe de support et de pattes de guidage solidaires du module lumineux correspondant, lesdites glissières du premier système de réglage, parallèles l'une à l'autre, s'étendant selon une direction sensiblement perpendiculaire à l'axe optique et parallèle à la direction selon laquelle s'étendent principalement les moyens d'arrêt en position.

Selon une caractéristique de l'invention, le ou les premier(s) système(s) de réglage sont configurés de sorte que les moyens de guidage en translation sont internes à un premier volume défini par l'organe de support et l'élément de fermeture, et de sorte que les moyens d'arrêt en position et les moyens de réglage comportent respectivement une vis de serrage ou un outil traversant une embase de l'organe de support. De la sorte, les moyens de réglage et de serrage sont facilement mis en oeuvre depuis l'extérieur de la boîte fermée formée par l'organe de support et l'élément de fermeture, les modules lumineux pouvant coulisser librement à l'intérieur de cette boîte par l'intermédiaire des moyens de guidage internes à la boîte.

La réalisation de l'étanchéité des modules lumineux réglables indépendamment l'un de l'autre est rendue facile, l'étanchéité étant uniquement à gérer au niveau des zones de passage à travers l'embase. On peut prévoir des éléments d'étanchéité autour de ces zones de passage, avantageusement comprimés lors de l'arrêt en position du module lumineux par rapport à l'organe de support via l'actionnement de la vis de serrage.

Une partie des moyens de guidage, de réglage ou d'arrêt en position est formée sur un corps du module lumineux, qui peut notamment consister en un radiateur destiné à refroidir la source lumineuse et le collecteur qu'il porte.

Ledit corps est particulièrement configuré pour coopérer avec au moins le premier système de réglage, de sorte que, lorsque le premier système de réglage est déplacé, le corps du module lumineux est entrainé et la position du collecteur et de la source lumineuse par rapport au système optique du module lumineux correspondant est modifiée.

Selon une caractéristique de l'invention, la position de l'organe de support est réglée par un deuxième système de réglage, ledit deuxième système de réglage étant configuré pour régler simultanément la position des différents modules lumineux. Ainsi, il est possible avantageusement, du fait de ce réglage étagé avec d'une part un réglage indépendant des modules lumineux au sein de la boîte formée par l'organe de support et l'élément de couverture et d'autre part un réglage simultané de ces modules lumineux par un déplacement de la boîte dans son ensemble, de réaliser un réglage optimal en plusieurs séquences de réglages dans des lieux différents. Notamment, il est possible de régler dans une première usine la position des modules lumineux par rapport à un référentiel formé par l'organe de support puis de régler la position de l'ensemble lors du montage du dispositif lumineux sur le véhicule. Ceci est notamment avantageux dans la mesure où l'accessibilité aux moyens de réglage lors du montage sur véhicule peut être rendue difficile par la présence d'autres composants dans la zone du véhicule où est monté le dispositif lumineux.

Selon une caractéristique de l'invention, le deuxième système de réglage est configuré pour déplacer l'organe de support selon un mouvement de rotation autour d'un premier axe de pivotement ou d'un deuxième axe de pivotement, le premier axe de pivotement et le deuxième axe de pivotement étant sensiblement perpendiculaires à au moins l'axe optique et sensiblement perpendiculaires entre eux.

Un tel système de réglage peut, par exemple, être mis en oeuvre par un système à trois points comprenant un point fixe et deux articulations, chacune desdites articulations étant configurée pour entrainer la rotation de l'organe de support autour de l'un des axes de pivotement. L'actionnement du deuxième système de réglage entraîne ainsi la modification de la position de l'organe de support, et donc des deux modules lumineux et de l'élément de fermeture. En d'autres termes, le deuxième système de réglage n'altère pas la position des modules lumineux par rapport à leurs systèmes optiques respectifs ou par rapport à l'élément de fermeture mais permet un second réglage, modifiant simultanément la position des différents modules lumineux.

Selon un premier mode de réalisation non couvert par l'invention, au moins l'élément de fermeture comporte des parois latérales de fixation à l'organe de support et une lentille de projection mince commune à au moins deux modules lumineux qui intègre au moins les systèmes optiques desdits modules lumineux, la lentille de projection mince formée dans l'élément de fermeture et les systèmes optiques étant réalisés dans un même matériau.

Autrement dit, les systèmes optiques consistent en des portions définies de l'élément de fermeture, présentant, par exemple, une face convexe s'étendant en direction du corps du module lumineux correspondant.

Selon une caractéristique non couverte par l'invention, le dispositif lumineux peut également comprendre un boîtier externe ouvert sur au moins un côté et fermé par une vitre de protection optiquement neutre, le boîtier externe et la vitre de protection délimitant une chambre principale dans laquelle s'étendent l'organe de support, les différents modules lumineux et au moins l'élément de fermeture intégrant au moins deux systèmes optiques. Par optiquement neutre, on comprend que les rayons traversant la matière considérée ne sont pas ou presque pas déviés.

Le boîtier externe et la vitre de protection forment ainsi un espace étanche, configuré pour protéger les modules lumineux de l'environnement externe au véhicule. Particulièrement, le boîtier externe et la vitre de protection forment une seconde barrière de protection des modules lumineux, en plus de celle formée par l'élément de fermeture. Également, le boîtier externe et la vitre de protection protègent le deuxième système de réglage de l'environnement externe, prévenant ainsi l'accumulation de particules au niveau des articulations le composant.

Selon une caractéristique du premier mode de réalisation non couvert par l'invention, le deuxième système de réglage s'étend, au moins en partie, entre l'organe de support et une base du boîtier externe. Le deuxième système de réglage permet ainsi de régler simultanément la position des deux modules lumineux et de l'élément de fermeture, portés par l'organe de support, par rapport au boîtier externe.

Selon une caractéristique non couverte par l'invention, ledit boîtier externe est rattaché à une structure du véhicule automobile par au moins un organe de fixation.

Un tel organe de fixation se distingue des premier système de réglage et deuxième système de réglage en ce qu'il est non articulé, et ne permet pas de modifier la position du dispositif lumineux par rapport à la structure du véhicule automobile. L'organe de fixation peut notamment consister en une vis.

Les systèmes optiques, tels que des lentilles réalisées en polyméthacrylate de méthyle (PMMA) ou en polycarbonate (PC) par exemple, sont ainsi configurés pour projeter les faisceaux lumineux réfléchis par le collecteur sur la chaussée tandis que l'élément de fermeture, par exemple réalisé dans du verre ou dans un polymère synthétique, n'altère pas la trajectoire d'éventuels faisceaux lumineux le traversant.

Avantageusement, les parois latérales absorbent, au moins en partie, des rayons lumineux externes, par exemple émis par le soleil ou toute source artificielle de lumière externe au véhicule automobile, susceptibles d'entrer dans le premier volume.

Selon les modes de réalisation alternatifs de la présente invention, le deuxième système de réglage peut être fixé à la structure du véhicule automobile et s'étend entre ladite structure et l'organe de support.

Alternativement, le deuxième système de réglage peut être fixé sur une platine intermédiaire et s'étend entre ladite platine intermédiaire et l'organe de support, la platine intermédiaire étant rattachée à une structure du véhicule automobile par au moins un organe de fixation.

La présence invention propose également un véhicule automobile comprenant au moins un dispositif lumineux tel que précédemment exposé, ménagé en face avant et/ou en face arrière du véhicule automobile.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig 1] est une représentation schématique d'un dispositif lumineux selon un premier mode de réalisation non couvert par l'invention ;
[Fig 2] est une représentation schématique d'un module lumineux du dispositif lumineux de la figure 1 ;
[Fig 3] est une représentation schématique du module lumineux de la figure 2, tel qu'il pouvait être déplacé selon un mouvement de rotation conformément à l'art antérieur ;
[Fig 4] est une représentation schématique du module lumineux de la figure 2, lorsque le module lumineux est déplacé conformément à l'invention selon un mouvement de translation ;
[Fig 5] est une vue en perspective arrière éclatée d'un premier système de réglage de la position de l'un des modules lumineux, permettant le déplacement en translation dudit module ;
[Fig 6] est une vue arrière du premier système de réglage selon la figure 5 illustrant la coopération entre un outil excentré et le premier système de réglage lorsque le système de réglage est ménagé dans une première position ;
[Fig 7] est une vue arrière du premier système de réglage selon la figure 6 illustrant la coopération entre l'outil excentré et le premier système de réglage lorsque le système de réglage est ménagé dans une deuxième position ;
[Fig 8] est une vue en perspective arrière d'un deuxième système de réglage de la position des modules lumineux, permettant le déplacement selon un mouvement de rotation de l'ensemble desdits modules, représenté dans le module lumineux ;
[Fig 9] est une représentation schématique d'un dispositif lumineux selon un deuxième mode de réalisation ;
[Fig 10] est une représentation schématique d'un dispositif lumineux selon une alternative du deuxième mode de réalisation ;

Il faut tout d'abord noter que les figures exposent l'invention de manière détaillée pour sa mise en oeuvre, mais que lesdites figures peuvent bien entendu servir à mieux définir l'invention, le cas échéant.

Par convention, dans tout le présent document, le qualificatif « longitudinale » s'applique à la direction dans laquelle s'étend l'axe optique d'au moins l'un des modules lumineux, les qualificatifs « transversale » et « verticale » s'appliquant respectivement à des directions sensiblement perpendiculaires à la direction longitudinale et perpendiculaires entre elles, et correspondant aux dimensions principales d'allongement d'une embase de l'organe de support. Par ailleurs, une direction longitudinale sera représentée, dans les figures le nécessitant, par l'axe Ox, une direction verticale sera représentée par l'axe Oy, et une direction transversale sera représentée par l'axe Oz. Ces différents axes définissent ensemble un repère orthonormé Oxyz représenté sur les différentes figures. Dans ce repère, les qualificatifs « haut » ou « supérieur » seront représentés par le sens positif de l'axe Oy, les qualificatifs « bas » ou « inférieur » étant représentés par le sens négatif de ce même axe Oy.

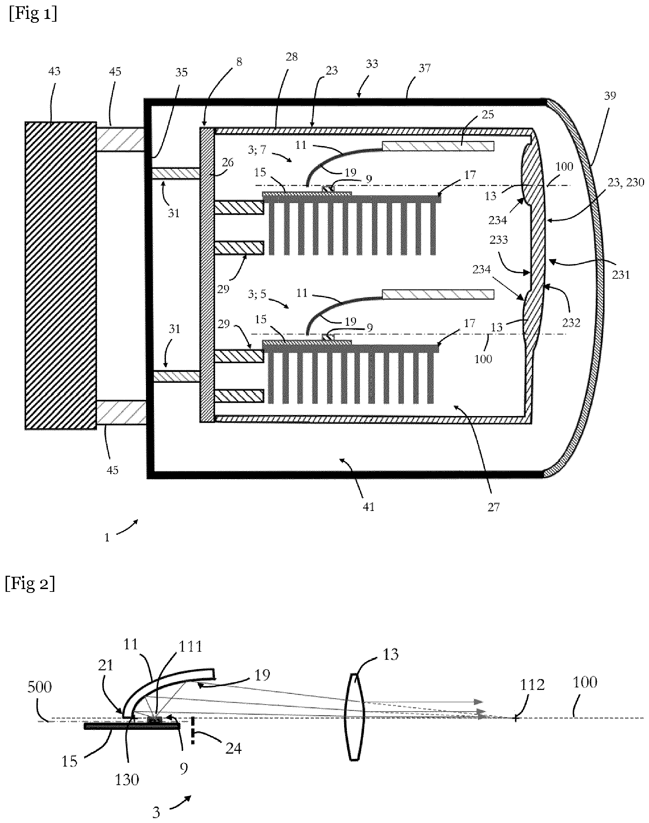

La figure 1 est une représentation schématique d'un dispositif lumineux 1 pour véhicule automobile comprenant deux modules lumineux 3 et la figure 2 est une représentation schématique de l'un desdits modules lumineux 3 et de son principe de fonctionnement. Il est à noter que, dans les représentations schématiques du présent document, les dimensions des composants du dispositif lumineux et les distances séparant lesdits composants sont fixées à titre explicatif et ne sont pas nécessairement représentatives de la réalité.

Dans l'exemple illustré, un premier module lumineux 5 et un deuxième module lumineux 7 sont ménagés l'un à côté de l'autre, les modules étant portés par un organe de support 8, par exemple une platine principale, le premier module lumineux 5 et le deuxième module lumineux 7 étant, par exemple, respectivement configurés pour projeter un faisceau de feu de croisement et un faisceau de feu de route en amont du véhicule automobile. Également, de tels modules lumineux 3 peuvent être disposés de sorte que le premier module lumineux 5 et le deuxième module lumineux 7 ne soient pas verticalement et/ou transversalement alignés.

Dans l'exemple illustré, chaque mode lumineux comprend au moins une source lumineuse 9, apte à émettre des rayons lumineux, un collecteur 11, configuré pour dévier les rayons lumineux émis par la source lumineuse 9 suivant un axe optique 100 du module lumineux 3, et un système optique 13, agencé sur le trajet des rayons lumineux et configuré pour former avec ces rayons un faisceau lumineux réglementaire. Les premier module lumineux 5 et deuxième module lumineux 7 sont ainsi configurés de manière à former respectivement un premier faisceau lumineux et un deuxième faisceau lumineux, permettant un éclairage règlementaire d'une scène de la route selon les conditions de roulage du véhicule.

La source lumineuse 9 comporte ici une source du type à semi-conducteur, comme notamment une diode électroluminescente. La source lumineuse 9 est disposée sur une carte de circuits imprimés 15 fixée sur un corps 17 du module lumineux, formant par exemple un radiateur configuré pour dissiper la chaleur générée par le fonctionnement de la source lumineuse. La source lumineuse 9 est configurée pour émettre des rayons lumineux dans un demi-espace délimité par le plan principal d'allongement 500 de la carte de circuits imprimés, notamment en direction du collecteur 11.

Le collecteur 11 présente une structure elliptique dont une surface interne est une surface réfléchissante 19 configurée pour dévier les rayons lumineux émis par la source lumineuse 9 du module lumineux 3 correspondant en direction du système optique 13 suivant un axe optique 100 propre à chaque module lumineux.

Le collecteur 11 est avantageusement réalisé dans des matériaux présentant une bonne tenue à la chaleur, par exemple du verre ou des polymères synthétiques comme du polycarbonate (PC) ou du polyétherimide (PEI).

La source lumineuse 9 est particulièrement disposée au niveau d'un premier foyer du collecteur 111 elliptique de sorte que les rayons déviés soient dirigés en direction d'un deuxième foyer 112 du collecteur elliptique agencé sur l'axe optique 100. Le système optique 13 est disposé sur l'axe optique entre les deux foyers du collecteur elliptique, et il présente plus particulièrement la forme d'une lentille convergente dont le foyer 130 est disposé ici au voisinage d'une portion arrière 21 du collecteur 11.

La portion arrière 21 du collecteur 11 peut comprendre une coupure horizontale avec un ressaut, non représentés. En d'autres termes, la surface réfléchissante 19 du collecteur 11, au niveau de la coupure, peut présenter une forme en marche d'escalier. Tel que cela a été précisé précédemment, l'image projetée sur la scène de route par le dispositif lumineux consiste en une imagerie directe du collecteur. De la sorte, le faisceau lumineux généré par les rayons réfléchis par le collecteur 11 et traversant le système optique 13 présente une coupure de forme correspondant à la forme en marche d'escalier de la coupure.

Le module lumineux 3 peut, de manière optionnelle, comprendre un écran opaque 24, représenté en pointillés sur la figure 2, interposé entre la source lumineuse 9 et le système optique 13 et s'étendant dans le demi-espace délimité par le plan principal d'allongement 500 de la carte de circuits imprimés et dans lequel ne s'étend pas la surface réfléchissante 19 du collecteur 11, afin de bloquer les rayons lumineux parasites émis par la source lumineuse 9, c'est-à-dire les rayons partant directement en direction du système optique sans être dévié par le collecteur 11. Une telle mesure contribue à limiter la présence de rayons lumineux parasites susceptibles de participer à la formation du faisceau lumineux sans pour autant être à proprement parler imagé.

De même, une cloison intermédiaire 25 peut être disposée dans le prolongement de l'extrémité libre du collecteur, là encore pour éviter que des rayons émis par la source lumineuse 9 ne se propage en dehors du module lumineux sans passer par le système optique 13 approprié. Une telle cloison intermédiaire 25 s'étend essentiellement perpendiculairement à l'organe de support 8 et est avantageusement absorbante de lumière.

Tel que décrit précédemment, le premier module lumineux 5 et le deuxième module lumineux 7 forment tous deux parties d'un même dispositif lumineux. Plus particulièrement, dans l'exemple illustré, le premier module lumineux 5 et le deuxième module lumineux 7 sont portés par une embase 26 de l'organe de support 8, le premier module lumineux 5 et le deuxième module lumineux 7 s'étendant dans un premier volume 27, essentiellement délimité par l'organe de support 8 et un élément de fermeture 23 commun aux deux modules lumineux. Particulièrement, dans un exemple non couvert par l'invention, l'élément de fermeture 23 comprend au moins deux parois latérales 28, respectivement configurés pour être fixés sur l'embase 26 de l'organe de support 8, par exemple par encliquetage, et une paroi de fermeture 230, agencée à l'opposé de l'embase 26 et disposée de manière à être sur le trajet de sortie des rayons lumineux émis par chaque source lumineuse et dévié par chaque collecteur d'un module lumineux.

A des fins de simplification et de réduction de l'encombrement du dispositif lumineux 1 de la présente invention, le système optique 13 de chaque module lumineux consiste en une lentille de projection mince, par exemple d'épaisseur inférieure à 7mm. Chaque système optique 13 est intégré dans la paroi de fermeture 230 de l'élément de fermeture 23 commun aux deux modules lumineux 5, 7, cet élément de fermeture étant porté par l'organe de support 8.

Le système optique 13 est ménagé sur la trajectoire du faisceau lumineux du module lumineux, le système optique 13 s'étendant selon une direction sensiblement perpendiculaire audit axe optique 100. Tel qu'illustré, la paroi de fermeture 230 comporte une zone centrale 231 dont la surface externe 232 présente une portion convexe continue en regard des deux modules lumineux et dont la surface interne 233 présentent deux portions convexes 234 distinctes respectivement en regard d'un des modules lumineux.

On va maintenant décrire les différents moyens de de réglage en position de chacun des modules lumineux dans le dispositif lumineux, particulier selon l'invention en ce qu'ils permettent un réglage par translation.

Le premier module lumineux 5 et le deuxième module lumineux 7 sont chacun fixés sur l'organe de support 8 par des premiers systèmes de réglage 29 qui sont configurés pour régler la position de l'un des modules lumineux par rapport à au moins l'autre module lumineux de manière indépendante.

Le premier système de réglage 29 permet ainsi de modifier la position de l'ensemble collecteur-source lumineuse du module lumineux correspondant par rapport à l'organe de support 8 et au système optique 13 dudit module lumineux. Chaque premier système de réglage 29 permet avantageusement le déplacement du module lumineux correspondant selon un mouvement de translation le long d'un axe perpendiculaire à l'axe optique 100, c'est-à-dire soit un déplacement le long de la direction verticale, soit un déplacement le long de la direction transversale.

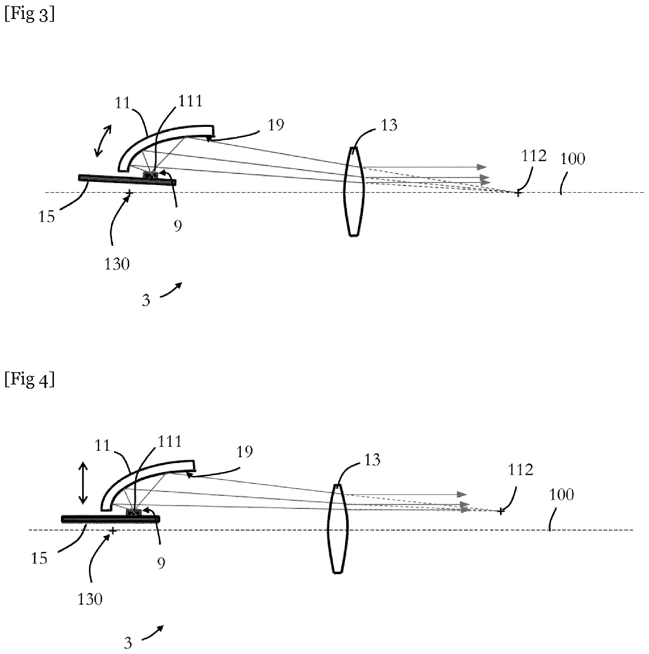

En se référant aux figures 3 et 4, il a été constaté par les inventeurs qu'un réglage par translation permet de remplacer avantageusement les solutions connues classiquement consistant à monter le module lumineux sur un système de réglage permettant le positionnement du module lumineux selon un mouvement de rotation. Tel qu'illustré dans la figure 3, dans un procédé de réglage déjà connu, l'ensemble collecteur-source lumineuse 11, 9 est déplacé par pivotement autour du deuxième foyer du collecteur 112. De la sorte, les rayons émis par la source lumineuse, qui reste disposée au voisinage du premier foyer de ce collecteur, sont déviés toujours de manière à passer par le deuxième foyer 112 et donc à passer à travers le système optique 13. Les rayons étant émis sensiblement au voisinage du foyer 130 du système optique, pour des rotations d'angle inférieur à 5° par exemple, il en résulte qu'au passage des rayons à travers le système optique, celui-ci dévie ces rayons en un faisceau parallèle à l'axe optique sur lequel il est centré.

Il a été constaté par les inventeurs que la position du deuxième foyer du collecteur 112 par rapport à l'axe optique 100 impactait de manière négligeable la distribution du faisceau lumineux traversant le système optique 13, de sorte que le déplacement de l'ensemble collecteur-source lumineuse 11, 9 par rotation peut avantageusement être approximé par un déplacement selon un mouvement de translation, notamment pour des rotations selon de faibles angles, par exemple ≤5°. Ceci est notamment illustré à la figure 4, où l'ensemble collecteur-source lumineuse est monté sur un système de réglage configuré pour entrainer le déplacement de l'ensemble collecteur-source lumineuse selon un mouvement de translation perpendiculaire à l'axe optique sans qu'un basculement dudit ensemble ne soit observé. La valeur de déplacement en translation est minime et configurée pour que la position de la source lumineuse soit la même que pour un déplacement en rotation précédemment évoqué. Le deuxième foyer du collecteur 112 est alors sensiblement décalé par rapport à l'axe optique 100, selon une direction parallèle à la direction de translation de l'ensemble collecteur-source lumineuse. Les inventeurs ont constaté que la combinaison des effets dû à l'écartement entre source lumineuse et foyer du système optique 130 d'une part et le décalage du second foyer par rapport à l'axe optique d'autre part générait une différence minime et acceptable réglementairement pour la formation du faisceau en sortie du système optique. L'utilisation d'un système de réglage de la position du module lumineux selon un mouvement de translation fournit ainsi une alternative simplifiée du dispositif lumineux 1 et c'est dans ce contexte que différents modes de réalisation sont décrits par la suite.

Le dispositif lumineux 1 tel qu'illustré dans la figure 1 et non couvert par l'invention, comprend également un deuxième système de réglage 31, configuré pour régler la position de l'organe de support 8, porteur des deux modules lumineux 3, par rapport à une pièce fixe, ici un boîtier externe 33, permettant ainsi une externalisation du réglage par rotation de la position des modules lumineux.

Le dispositif lumineux 1 est ainsi configuré pour permettre dans un premier temps le réglage indépendant de chaque module lumineux par rapport au système optique 13 correspondant, par l'intermédiaire du premier système de réglage 29 selon un déplacement en translation, puis, dans un deuxième temps, le réglage de la position de l'organe de support 8, porteur des différents modules lumineux 3, par rapport au boîtier externe 33.

Le boîtier externe 33 comprend une base 35, traversée par le deuxième système de réglage 31 et une pluralité de flancs latéraux 37 configurés pour porter une vitre de protection 39, optiquement neutre. Le boîtier externe 33 et la vitre de protection 39 délimitent ainsi une chambre principale 41 dans laquelle s'étendent l'organe de support 8, l'élément de fermeture 23, les deux modules lumineux, ainsi que le deuxième système de réglage 31.

Particulièrement, la base 35 et les flancs latéraux 37 du boîtier externe 33 peuvent être opaques afin d'absorber d'éventuels rayons lumineux externes au dispositif lumineux 1.

Les modules lumineux 3 sont ainsi protégés de l'environnement externe au véhicule, notamment des intempéries ou encore de l'accumulation de salissures, d'une part par l'ensemble formé par la vitre de protection 39 et par le boîtier externe 33 et d'autre part par l'ensemble formé par l'organe de support 8 et l'élément de fermeture 23 intégrant les systèmes optiques 13.

Dans le premier mode de réalisation, non couvert par l'invention, le boîtier externe 33 est rattaché à une structure du véhicule automobile 43 par au moins un organe de fixation 45. L'organe de fixation 45, s'étend au moins entre la structure du véhicule automobile 43 et la base 35 du boîtier externe 33 et confère un tolérancement plus important de la fixation du dispositif lumineux 1 sur le véhicule automobile.

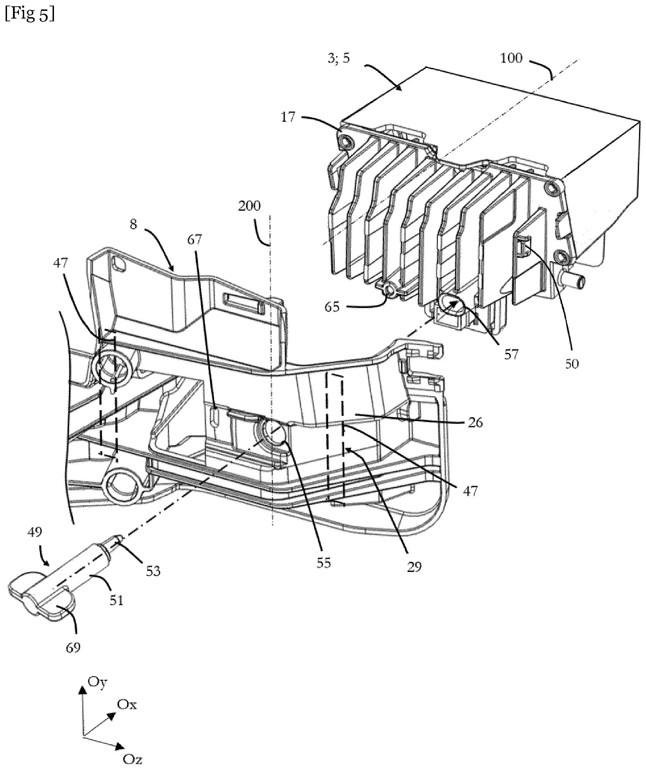

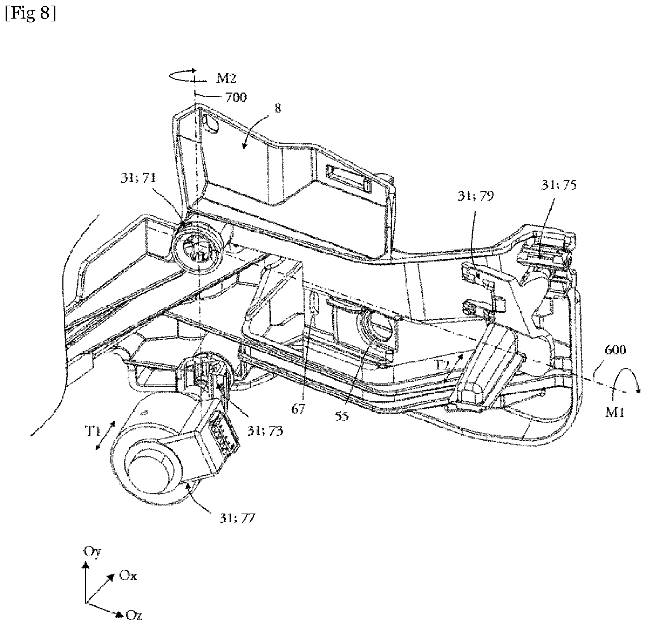

Les figures 5 à 8 illustrent les premier système de réglage 29 et deuxième système de réglage 31 tels que précédemment évoqués, les figures 5 à 7 détaillant le premier système de réglage 29, permettant le déplacement selon un mouvement de translation du module lumineux, tandis que la figure 8 détaille le deuxième système de réglage 31, permettant un déplacement selon un mouvement de rotation de l'organe de support 8 portant le premier module lumineux 5 et le deuxième module lumineux 7.

Les figures 5 à 7 illustrent le premier système de réglage 29 sur lequel est fixé le premier module lumineux 5. Toute caractéristique dudit premier système de réglage 29 peut également être étendue au premier système de réglage 29, non représenté, sur lequel est fixé le deuxième module lumineux 7.

Le premier système de réglage 29 est configuré afin d'entraîner en déplacement le premier module lumineux 5, selon un mouvement de translation le long d'un axe perpendiculaire à l'axe optique 100. Dans l'exemple illustré, le premier module lumineux 5 est déplacé le long d'un axe de coulissement 200, sensiblement parallèle à une direction verticale.

A cette fin, le premier système de réglage 29 comprend au moins des moyens de guidage en translation du module par rapport à l'organe de support et des moyens d'arrêt en position lorsque la position souhaitée du module lumineux est obtenue, ainsi que des moyens de réglage du déplacement en translation du module lumineux.

Dans l'exemple illustré, les moyens de guidage en translation comportent d'une part une paire de glissières 47 et d'autre part des organes complémentaires 50 aptes à coulisser dans les glissières. Et plus particulièrement, les glissières sont portées par l'organe de support 8 et les organes complémentaires par le module lumineux, étant entendu que sans sortir du contexte de l'invention, on pourra les positionner à l'inverse.

Les glissières 47, représentées en lignes pointillées sur les figures 5 à 7, sont directement ou indirectement fixées sur l'embase 26 de l'organe de support 8, ici la platine principale, et sont tournées vers l'avant du véhicule, c'est-à-dire vers le premier module lumineux 5. Les deux glissières 47 s'étendent parallèlement à l'axe de coulissement 200, ici à la direction verticale, et sont configurées pour recevoir les organes complémentaires du module lumineux, par exemple des pattes à crochet 50. A titre d'exemple et tel qu'illustré, les organes complémentaires du premier système de réglage 29 peuvent être fixé sur le corps 17 du module lumineux.

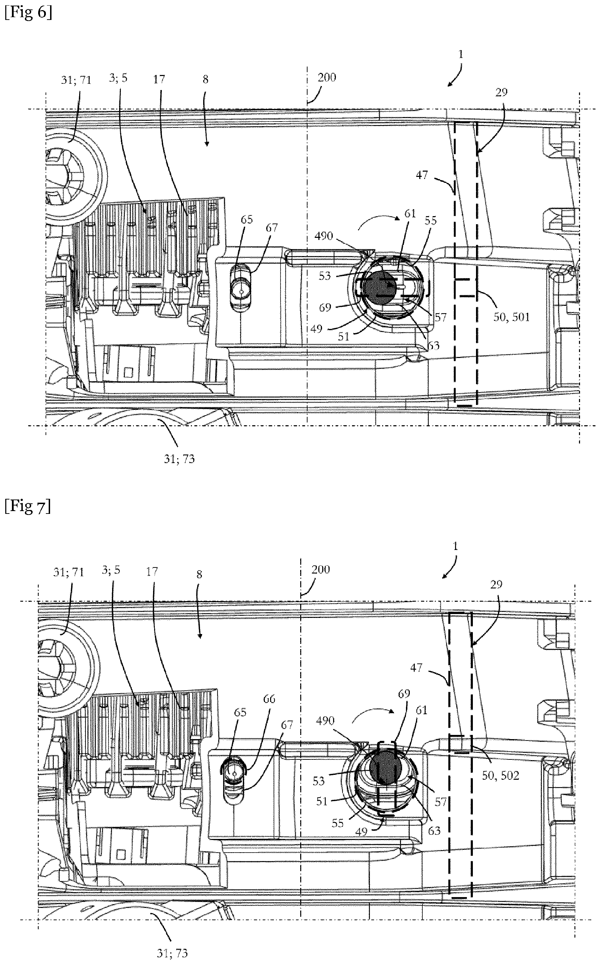

Les moyens d'arrêt en position comportent ici un trou taraudé 65 réalisé dans le corps 17 du module lumineux et un alésage oblong 67 réalisé dans l'organe de support 8, ledit alésage oblong s'étendant principalement selon une direction parallèle à l'axe de coulissement 200. Les moyens d'arrêt en position comportent par ailleurs une vis de serrage 66 qui peut être laissée à demeure dans le trou taraudé en étant plus ou moins serrée ou bien être rapportée au moment où la position souhaitée est obtenue. La vis de serrage comporte une tige dimensionnée pour traverser l'alésage oblong 67 et pour coopérer avec le trou taraudé 65 et une tête dimensionnée pour prendre appui sur une paroi dont les bords délimitent l'alésage oblong (telle que représentée en traits pointillés sur la figure 7 pour ne pas cacher le trou taraudé 65).

Les moyens de réglage en translation de la position comportent un orifice circulaire 55 ménagé dans l'organe de support 8 et une cavité oblongue 57 ménagée dans le corps 17 du module lumineux, la cavité oblongue s'étendant principalement selon une direction perpendiculaire à l'axe de coulissement 200. Ces moyens de réglage sont mis en oeuvre tel que cela va être décrit ci-après par l'intermédiaire d'un outil excentrique 49.

Lorsque le module lumineux est positionné en regard de l'organe de support, il convient de noter que la direction principale de l'alésage oblong 67 est perpendiculaire à la direction principale de la cavité oblongue 57. Par ailleurs, il convient de noter également que la direction principale de la cavité oblongue 57 est perpendiculaire à la direction principale de la glissière formant les moyens de réglage, cette dernière direction étant parallèle à la direction principale de l'alésage oblong 67.

L'outil excentrique 49 comprend un corps cylindrique 51, dont la section présente un diamètre sensiblement équivalent à celui de l'orifice circulaire 55, et un doigt 53, dont la section présente un diamètre sensiblement équivalent à la petite dimension de la cavité oblongue, le doigt étant décentré par rapport au corps cylindrique 51. L'outil excentrique 49 peut avantageusement comprendre des ailettes 69, formant des saillies radiales du corps cylindrique et visant à faciliter la préhension de l'outil excentrique 49 lors du réglage.

Le réglage en position par translation du module lumineux par rapport à l'organe de support 8 s'effectue de la manière suivante.

Dans la position avant réglage, le module lumineux est disposé en regard de l'organe de support de sorte que l'orifice 55 et l'alésage oblong 67 de l'organe de support soient en regard respectivement de la cavité oblongue 57 et du trou taraudé 65 du module lumineux.

L'outil excentrique 49, par exemple porté par un bras de robot automatisé, est inséré dans l'orifice 55 de l'organe de support 8 jusqu'à ce que le doigt 53 s'étende au moins en partie dans la cavité oblongue 57 du corps 17 du module lumineux, ménagée en regard de l'orifice 55 de l'organe de support 8, tel qu'illustré dans les figures 5 et 6. Tel que cela est plus particulièrement visible sur la figure 6, représentant schématiquement la position de l'outil excentrique avec une représentation en pointillés du corps et des ailettes et une représentation grisée du doigt 53, la cavité oblongue 57 du corps 17 présente deux bords délimitant la cavité le long de la direction principale d'allongement, parmi lesquels un premier bord 61 et un deuxième bord 63, qui sont écartés d'une distance telle qu'ils sont en contact avec le doigt 53 de l'outil excentrique 49.

Afin de déplacer le module lumineux en translation par rapport à l'organe de support, depuis une première position 501, telle qu'illustrée dans la figure 6, vers une deuxième position 502, telle qu'illustrée dans la figure 7, l'outil excentrique 49 est actionné de sorte que le corps cylindrique 51 pivote dans l'orifice 55 de l'organe de support 8 et de sorte que le doigt tourne autour de l'axe de pivotement du corps cylindrique, entraînant dans sa rotation le déplacement de la cavité oblongue du fait de l'appui du doigt 53 contre le premier ou le deuxième bord, selon le sens de rotation.

Dans l'exemple illustré, l'outil excentrique 49 est actionné par les ailettes 69 de sorte que le corps cylindrique 51 soit pivoté de 90°, dans le sens horaire, dans l'orifice 55. Un tel pivotement déplace le doigt 53, autour de l'axe de rotation 490 autour duquel le corps cylindrique pivote, vers une position décalée par rapport à sa position d'origine selon les deux directions perpendiculaires à cet axe de rotation 490.

La perpendicularité entre les directions d'allongement des glissières 47 et de la cavité oblongue 57 permet de ne pas bloquer le système de réglage, et cela permet notamment, par le déplacement du module lumineux le long de la direction d'allongement des glissières 47, d'accompagner la rotation du doigt. Lors de ce déplacement, le doigt court le long du premier bord 61 ou du deuxième bord 63 selon le sens de rotation de l'outil excentrique, ici le premier bord 61. Le module lumineux étant retenu par la présence de ces pattes formant les organes complémentaires des glissières 47, son déplacement est guidé le long des glissières selon un mouvement de translation le long de l'axe de coulissement 200, perpendiculairement à la direction d'allongement de la cavité oblongue.

Tel qu'illustré sur la figure 7, le trou taraudé 65 du corps 17 du module lumineux est également déplacé selon l'axe de coulissement 200 et sa position relative par rapport à l'alésage oblong 67 de l'organe de support 8 en est d'autant modifiée. Lorsque le module lumineux est dans une position appropriée, c'est à dire dans une position où le faisceau lumineux émis correspond aux attentes de l'utilisateur, la vis de serrage peut alors être insérée, ou serrée si elle est restée à demeure dans le trou taraudée, afin de maintenir le module lumineux dans cette position, ici la deuxième position 502.

Une fois le module lumineux réglé en position, la vis de serrage assure le plaquage du module lumineux contre l'organe de support de sorte que l'étanchéité est au moins partiellement réalisée. Des organes d'étanchéité peuvent avantageusement être prévus sur la face interne de l'organe de support, c'est-à-dire sur la face en regard du module lumineux, et sur la face du module lumineux en regard de l'organe de support, autour de chacun des alésage et cavité oblongues, de sorte que le serrage du module lumineux contre l'organe de support tend à les comprimer et à assurer une étanchéité optimale.

De la sorte, il convient de noter que l'on peut avoir des moyens de réglage en translation de la position du module lumineux depuis l'extérieur du premier volume défini par l'organe de support 8 et l'élément de fermeture 23, ce qui facilite ledit réglage, tout en conservant une étanchéité optimale.

Dans le dispositif lumineux non couvert par l'invention, les modules lumineux sont réglables en translation à l'intérieur de ce premier volume défini par l'organe de support 8 et l'élément de fermeture 23, et cet ensemble est réglable en position via un deuxième système de réglage 31 plus classique. Tel que précédemment exposé, dans le premier mode de réalisation le deuxième système de réglage 31 permet la fixation de l'organe de support 8, porteur des deux modules lumineux, sur la base 35 du boîtier externe 33. Le deuxième système de réglage 31 est configuré afin de permettre le déplacement selon un mouvement de rotation multiaxial de l'organe de support 8, ici par rapport au boîtier externe 33.

A cet effet le deuxième système de réglage 31 comprend un point fixe 71, représenté sur la figure 8 sans la partie complémentaire de fixation sur le boîtier externe, une première articulation 73 et une deuxième articulation 75 avec des actionneurs associés.

La première articulation 73 est configurée pour recevoir un premier actionneur 77, muni d'une tige de sortie dont l'extrémité libre coopère avec ladite première articulation 73 via une liaison glissante orientée selon une première direction. Le déplacement du premier actionneur 77, en coulissement selon un mouvement de translation T1 dans les deux sens, entraîne le déplacement de la tige et par suite de l'organe de support 8, et donc des modules lumineux 3, selon un mouvement de rotation M1 autour d'un premier axe de pivotement 600 formé par le point fixe 71 et la deuxième articulation 75, ici un axe sensiblement parallèle à la direction transversale. Dans l'orientation choisie de la figure 8, l'actionnement du premier actionneur 77 permet ainsi le réglage de l'orientation verticale de l'organe de support 8 et des deux modules lumineux 3.

De façon similaire, la deuxième articulation 75 est configurée pour recevoir un deuxième actionneur 79, muni d'une tige de sortie dont l'extrémité libre coopère avec ladite deuxième articulation 75 via une liaison glissante orientée selon une deuxième direction perpendiculaire à la première direction. Le déplacement du deuxième actionneur 79, en coulissement selon un mouvement de translation T2 dans les deux sens, entraîne le déplacement de la tige et par suite de l'organe de support 8, et donc des modules lumineux 3, selon un mouvement de rotation M2 autour d'un deuxième axe de pivotement 700, formé par le point fixe 71 et la première articulation 73, ici un axe sensiblement parallèle à la direction verticale et sensiblement perpendiculaire au premier axe de pivotement 600. Dans l'orientation choisie de la figure 8, l'actionnement du premier actionneur 77 permet ainsi le réglage de l'orientation horizontale de l'organe de support 8 et des deux modules lumineux 3.

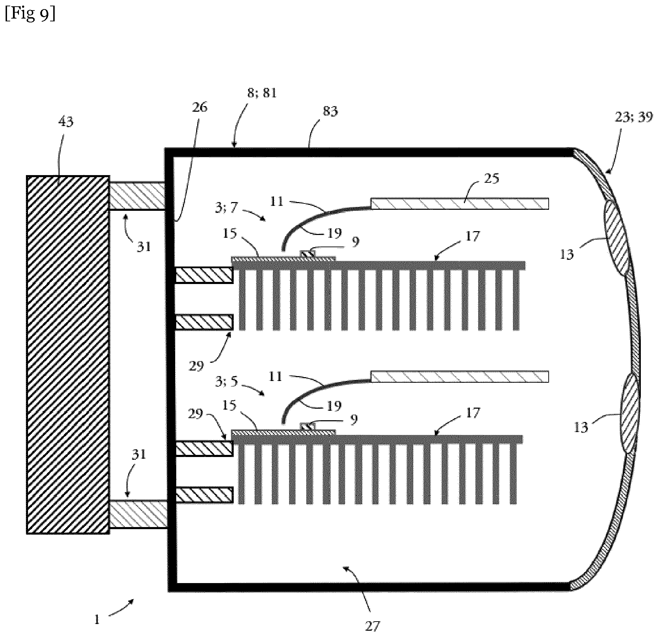

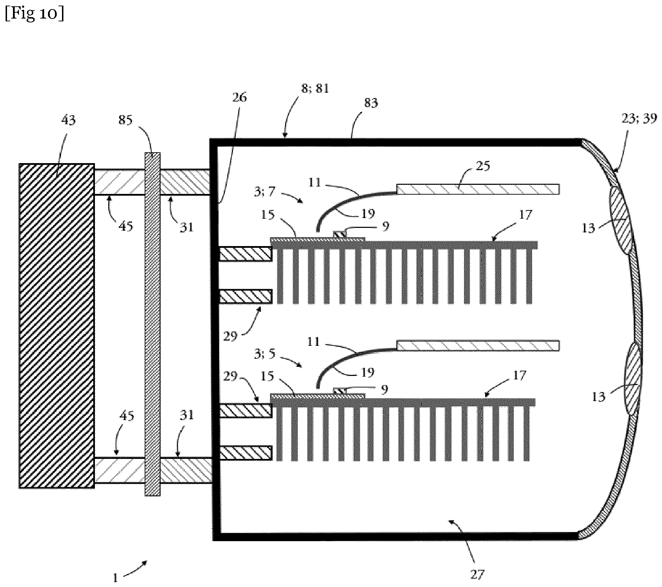

Les figures 9 et 10 illustrent respectivement un deuxième mode de réalisation et une alternative du deuxième mode de réalisation du dispositif lumineux 1 mettant en oeuvre le premier système de réglage 29 et le deuxième système de réglage 31 tels que précédemment exposés.

Ces modes de réalisation se distinguent du premier mode de réalisation en ce que l'organe de support 8 est un boîtier de protection 81 ouvert sur au moins un côté. Le boîtier de protection 81 comprend l'embase 26 et une pluralité de parois latérales 83 opaques, le boîtier de protection 81 étant particulièrement configuré pour porter l'élément de fermeture 23.

L'élément de fermeture 23 est fixé sur les parois latérales 83 de manière à fermer le boîtier de protection 81 et à délimiter le premier volume 27. L'ensemble formé par l'organe de support 8 et l'élément de fermeture 23 délimite ainsi, comme précédemment exposé dans le premier mode de réalisation, un espace dans lequel s'étendent le premier module lumineux 5 et le deuxième module lumineux 7.

Additionnellement, ces modes de réalisation se distinguent du premier mode de réalisation (non couvert par l'invention) en ce que l'élément de fermeture 23 est une vitre de protection 39, neutre, configurée pour intégrer ou porter les systèmes optiques 13 correspondant à chaque module lumineux, consistant en des lentilles de projection minces. Dans un mode de réalisation non couvert par l'invention, la vitre de protection 39 peut être réalisée dans le même matériau que celui des systèmes optiques 13, mais selon l'invention la vitre de protection 39 est réalisée dans un matériau distinct de celui utilisé pour réaliser les systèmes optiques, ledit matériau ne favorisant pas la projection du faisceau lumineux. L'élément de fermeture 23 forme ainsi une barrière physique protectrice entre les modules lumineux et l'environnement externe au véhicule. La vitre de protection et/ou les systèmes optiques 13 intégrés dans la vitre de protection peuvent être réalisés en polyméthacrylate de méthyle (PMMA) ou en polycarbonate (PC).

Similairement au premier mode de réalisation, chacun des corps 17 des modules lumineux est fixé à l'embase 26 de l'organe de support 8 par le premier système de réglage 29, lequel permet le positionnement, selon un mouvement de translation perpendiculaire à l'axe optique 100, de l'ensemble collecteur-source lumineuse 11,9 par rapport au système optique 13 correspondant.

Dans le deuxième mode de réalisation, représenté à la figure 9, le deuxième système de réglage 31 tel que précédemment décrit s'étend entre l'embase 26 de l'organe de support 8 et la structure du véhicule automobile 43. Le deuxième système de réglage 31 est ainsi configuré pour régler la position de l'organe de support 8 par rapport à la structure du véhicule automobile 43 par un déplacement selon un mouvement de rotation, notamment autour du premier axe de pivotement 600 ou du deuxième axe de pivotement 700 tels que représentés dans la figure 8.

Dans l'alternative du deuxième mode de réalisation, représentée à la figure 10, le deuxième système de réglage 31 s'étend entre l'embase 26 de l'organe de support 8 et une platine intermédiaire 85, laquelle est fixée à la structure du véhicule automobile 43 par l'intermédiaire d'au moins un organe de fixation 45. La présence d'une telle platine intermédiaire 85 confère notamment un meilleur tolérancement de la fixation du dispositif lumineux 1 sur le véhicule automobile, simplifiant de ce fait le montage dudit dispositif.

On comprend à la lecture de ce qui précède que la présente invention propose un dispositif lumineux d'un véhicule automobile simplifié et compacté, comprenant au moins deux modules lumineux comportant un système optique de type lentille de projection mince, le dispositif lumineux comprenant également un premier système de réglage et un deuxième système de réglage de la position desdits modules lumineux. Le premier système de réglage est configuré pour régler la position d'au moins l'un des modules lumineux indépendamment d'au moins l'autre module lumineux selon un déplacement en translation par rapport au système optique correspondant, tandis que le deuxième système de réglage permet le déplacement simultané des différents modules lumineux selon un mouvement de rotation. Également, le dispositif lumineux comprend un élément commun, porteur d'au moins deux systèmes optiques, configuré pour assurer la protection, au moins partielle, des modules lumineux.

L'invention ne saurait toutefois se limiter aux moyens et configurations décrits et illustrés ici, et elle s'étend également à tout moyen ou configuration équivalents et à toute combinaison technique opérant de tels moyens. En particulier, le nombre de module lumineux pourra être modifiés sans nuire à l'invention, dans la mesure où le dispositif lumineux, in fine, remplit les mêmes fonctionnalités que celles décrites dans ce document.

## Revendications

1. Dispositif lumineux (1), notamment pour véhicule automobile, comprenant au moins deux modules lumineux (3, 5, 7) et au moins un organe de support (8) porteur desdits modules lumineux, chaque module lumineux (3, 5, 7) comportant au moins une source lumineuse (9) apte à émettre des rayons lumineux et un système optique (13) disposé, sur un axe optique (100) spécifique du module lumineux, en travers des rayons lumineux et configuré pour projeter un faisceau lumineux, l'organe de support (8) porteur des différents modules lumineux (3, 5, 7) étant d'une part solidaire d'un élément de fermeture (23) intégrant au moins deux systèmes optiques (13) et d'autre part relié à au moins un premier système de réglage (29) permettant le déplacement indépendant de l'un des modules lumineux (3, 5, 7) par rapport à au moins l'autre module lumineux (3, 5, 7) **caractérisé en ce que** l'organe de support (8) présente la forme d'un boîtier ouvert, muni de parois latérales (83) opaques et recouvert d'une vitre de protection (39), la vitre de protection (39) étant l' élément de fermeture (23) et réalisée dans un premier matériau, transparent et optiquement neutre, et la vitre de protection comprenant au moins les systèmes optiques (13) d'au moins deux modules lumineux distincts (3, 5, 7), les systèmes optiques (13) consistant en des lentilles de projection minces réalisées dans un deuxième matériau, distinct du premier matériau de la vitre de protection (39).

2. Dispositif lumineux (1) selon la revendication 1, dans lequel le premier système de réglage (29) d'au moins l'un des modules lumineux (3, 5, 7) comporte des moyens de guidage en translation (47, 50) du module lumineux par rapport à l'organe de support selon un mouvement de translation le long d'un axe perpendiculaire à l'axe optique (100) correspondant.

3. Dispositif lumineux (1) selon la revendication 2, dans lequel chaque module lumineux (3, 5, 7) est monté sur l'organe de support (8) via un premier système de réglage (29) comportant des moyens de guidage en translation (47, 50) du module lumineux par rapport à l'organe de support, le dispositif lumineux étant configuré de sorte que les moyens de guidage en translation soient orientés selon des directions différentes.

4. Dispositif lumineux (1) selon l'une des revendications 2 ou 3, dans lequel chaque premier système de réglage (29) comporte, outre les moyens de guidage en translation (47, 50) du module lumineux par rapport à l'organe de support, d'une part des moyens d'arrêt en position (65, 66, 67) ainsi que des moyens de réglage (55, 57) du déplacement en translation du module lumineux.

5. Dispositif lumineux (1) selon la revendication précédente, dans lequel les moyens d'arrêt en position et les moyens de réglage comportent au moins un élément oblong et un élément circulaire respectivement formés sur l'un ou l'autre du module lumineux (3, 5, 7) et de l'organe de support (8) et disposés en regard, l'élément oblong (67) des moyens d'arrêt en position s'étendant selon une direction sensiblement perpendiculaire à la direction selon laquelle s'étend l'élément oblong (57) des moyens de réglage.

6. Dispositif lumineux (1) selon l'une des revendications 4 ou 5, dans lequel le ou les premier(s) système(s) de réglage (29) sont configurés de sorte que les moyens de guidage en translation sont internes à un premier volume (27) défini par l'organe de support (8) et l'élément de fermeture (23), et de sorte que les moyens d'arrêt en position et les moyens de réglage comportent respectivement une vis de serrage (66) ou un outil (49) traversant une embase (26) de l'organe de support (8).

7. Dispositif lumineux (1) selon l'une des revendications précédentes, dans lequel la position de l'organe de support (8) est réglée par un deuxième système de réglage (31), ledit deuxième système de réglage (31) étant configuré pour régler simultanément la position des différents modules lumineux (3, 5, 7).

8. Dispositif lumineux (1) selon la revendication précédente, dans lequel le deuxième système de réglage (31) est configuré pour déplacer l'organe de support (8) selon un mouvement de rotation autour d'un premier axe de pivotement (600) ou d'un deuxième axe de pivotement (700), le premier axe de pivotement (600) et le deuxième axe de pivotement (700) étant sensiblement perpendiculaires à l'axe optique (100) et sensiblement perpendiculaires entre eux.

9. Dispositif lumineux (1) selon l'une quelconque des revendications là 8 **caractérisé en ce que** chaque module lumineux comporte un collecteur (11) en direction duquel la source lumineuse (9) émet ses rayons, ledit collecteur (11) étant équipé d'une surface réfléchissante (19) configurée pour dévier les rayons lumineux émis par la source lumineuse (9) en direction du système optique (13).

10. Dispositif lumineux (1) selon la revendication précédente **caractérisé en ce que** le système optique (13) est configuré pour projeter une image de la surface réfléchissante (19) du collecteur (11).

11. Dispositif lumineux (1) selon la revendication précédente **caractérisé en ce que** le collecteur (11) présente un bord d'extrémité au voisinage de la source lumineuse (9) au profil spécifique, qui participe à donner à l'image projetée un profil approprié, et notamment une coupure appropriée, pour la réalisation d'une fonction optique souhaitée.

12. Dispositif lumineux (1) selon la revendication précédente **caractérisé en ce que** le bord d'extrémité du collecteur (11) est découpé de manière à présenter un profil en marche d'escalier.

13. Dispositif lumineux (1) selon l'une des revendications 9 à 12 **caractérisé en ce que** le collecteur (11) présente une forme elliptique ou parabolique.

14. Véhicule automobile comprenant au moins un dispositif lumineux (1) selon l'une quelconque des revendications précédentes, ménagé en face avant et/ou en face arrière du véhicule automobile.

## Patentansprüche

1. Leuchtvorrichtung (1), insbesondere für ein Kraftfahrzeug, umfassend mindestens zwei Leuchtmodule (3, 5, 7) und mindestens ein die Leuchtmodule tragendes Halterungsorgan (8), wobei jedes Leuchtmodul (3, 5, 7) mindestens eine Lichtquelle (9) beinhaltet, die geeignet ist, Lichtstrahlen zu emittieren, und ein optisches System (13), das, auf einer spezifischen optischen Achse (100) des Leuchtmoduls, quer zu den Lichtstrahlen angeordnet ist und dazu ausgestaltet ist, ein Lichtbündel zu projizieren, wobei das die verschiedenen Leuchtmodule (3, 5, 7) tragende Halterungsorgan zum einen an einem Abschlusselement (23) befestigt ist, in das mindestens zwei optische Systeme (13) integriert sind, und zum anderen mit mindestens einem ersten Einstellsystem (29) verbunden ist, das die unabhängige Verlagerung von einem der Leuchtmodule (3, 5, 7) in Bezug auf mindestens das andere Leuchtmodul (3, 5, 7) ermöglicht, **dadurch gekennzeichnet, dass** das Halterungsorgan (8) die Form eines offenen Gehäuses aufweist, das mit undurchsichtigen seitlichen Wänden (83) versehen ist und mit einer Schutzscheibe (39) abgedeckt ist, wobei die Schutzscheibe (39) das Abschlusselement (23) ist und aus einem ersten, transparenten und optisch neutralen Material ausgeführt ist und wobei die Schutzscheibe mindestens die optischen Systeme (13) von mindestens zwei verschiedenen Leuchtmodulen (3, 5, 7) umfasst, wobei die optischen Systeme (13) aus dünnen Projektionslinsen bestehen, die aus einem zweiten Material ausgeführt sind, das von dem ersten Material der Schutzscheibe (39) verschieden ist.

2. Leuchtvorrichtung (1) nach Anspruch 1, wobei das erste Einstellsystem (29) mindestens eines der Leuchtmodule (3, 5, 7) Mittel zur Translationsführung (47, 50) des Leuchtmoduls in Bezug auf das Halterungsorgan gemäß einer Translationsbewegung entlang einer zu der entsprechenden optischen Achse (100) senkrecht verlaufenden Achse beinhaltet.

3. Leuchtvorrichtung (1) nach Anspruch 2, wobei jedes Leuchtmodul (3, 5, 7) an dem Halterungsorgan (8) über ein erstes Einstellsystem (29) angebracht ist, das Mittel zur Translationsführung (47, 50) des Leuchtmoduls in Bezug auf das Halterungsorgan beinhaltet, wobei die Leuchtvorrichtung so ausgestaltet ist, dass die Mittel zur Translationsführung entlang verschiedener Richtungen ausgerichtet sind.

4. Leuchtvorrichtung (1) nach einem der Ansprüche 2 oder 3, wobei jedes erste Einstellsystem (29), neben den Mitteln zur Translationsführung (47, 50) des Leuchtmoduls in Bezug auf das Halterungsorgan zum einen Mittel zur Positionsarretierung (65, 66, 67) sowie Mittel zum Einstellen (55, 57) der Translationsverlagerung des Leuchtmoduls beinhaltet.

5. Leuchtvorrichtung (1) nach dem vorhergehenden Anspruch, wobei die Mittel zur Positionsarretierung und die Mittel zum Einstellen mindestens ein längliches Element und ein kreisförmiges Element beinhalten, die an dem einen beziehungsweise dem anderen der Leuchtmodule (3, 5, 7) und des Halterungsorgans (8) gebildet sind und gegenüber angeordnet sind, wobei sich das längliche Element (67) der Mittel zur Positionsarretierung entlang einer Richtung erstreckt, die im Wesentlichen senkrecht zu der Richtung ist, entlang der sich das längliche Element (57) der Mittel zum Einstellen erstreckt.

6. Leuchtvorrichtung (1) nach einem der Ansprüche 4 oder 5, wobei das oder die erste (n) Einstellsystem(e) (29) so ausgestaltet sind, dass die Mittel zur Translationsführung innerhalb eines ersten Volumens (27) sind, das durch das Halterungsorgan (8) und das Abschlusselement (23) definiert wird, und so, dass die Mittel zur Positionsarretierung und die Mittel zum Einstellen jeweils eine Stellschraube (66) oder ein Werkzeug (49), das einen Sockel (26) des Halterungsorgans (8) durchdringt, beinhalten.

7. Leuchtvorrichtung (1) nach einem der vorhergehenden Ansprüche, wobei die Position des Halterungsorgans (8) durch ein zweites Einstellsystem (31) eingestellt wird, wobei das zweite Einstellsystem (31) dazu ausgestaltet ist, die Position der verschiedenen Leuchtmodule (3, 5, 7) gleichzeitig einzustellen.

8. Leuchtvorrichtung (1) nach dem vorhergehenden Anspruch, wobei das zweite Einstellsystem (31) dazu ausgestaltet ist, das Halterungsorgan (8) gemäß einer Rotationsbewegung um eine erste Schwenkachse (600) oder eine zweite Schwenkachse (700) herum zu verlagern, wobei die erste Schwenkachse (600) und die zweite Schwenkachse (700) im Wesentlichen senkrecht zu der optischen Achse (100) und im Wesentlichen senkrecht zueinander sind.

9. Leuchtvorrichtung (1) nach einem der Ansprüche 1 bis 8, **dadurch gekennzeichnet, dass** jedes Leuchtmodul einen Kollektor (11) beinhaltet, in dessen Richtung die Lichtquelle (9) ihre Stahlen emittiert, wobei der Kollektor (11) mit einer reflektierenden Oberfläche (19) ausgestattet ist, die dazu ausgestaltet ist, die von der Lichtquelle (9) emittierten Lichtstrahlen in Richtung des optischen Systems (13) umzulenken.

10. Leuchtvorrichtung (1) nach dem vorhergehenden Anspruch, **dadurch gekennzeichnet, dass** das optische System (13) dazu ausgestaltet ist, ein Bild der reflektierenden Oberfläche (19) des Kollektors (11) zu projizieren.

11. Leuchtvorrichtung (1) nach dem vorhergehenden Anspruch, **dadurch gekennzeichnet, dass** der Kollektor (11) einen Endrand in der Nähe der Lichtquelle (9) mit spezifischem Profil aufweist, der dazu beiträgt, dem projizierten Bild ein geeignetes Profil und insbesondere eine geeignete Hell-Dunkel-Grenze zum Ausführen einer gewünschten optischen Funktion zu verleihen.

12. Leuchtvorrichtung (1) nach dem vorhergehenden Anspruch, **dadurch gekennzeichnet, dass** der Endrand des Kollektors (11) so ausgeschnitten ist, dass er ein Treppenstufenprofil aufweist.

13. Leuchtvorrichtung (1) nach einem der Ansprüche 9 bis 12, **dadurch gekennzeichnet, dass** der Kollektor (11) eine elliptische oder parabolische Form aufweist.

14. Kraftfahrzeug, das mindestes eine Leuchtvorrichtung (1) nach einem der vorhergehenden Ansprüche umfasst, die an der Vorderseite und/oder an der Rückseite des Kraftfahrzeugs ausgebildet ist.

## Claims

1. A lighting device (1), notably for a motor vehicle, comprising at least two lighting modules (3, 5, 7) and at least one support member (8) supporting said lighting modules, each lighting module (3, 5, 7) comprising at least one light source (9) able to emit rays of light and an optical system (13) positioned, on an optical axis (100) specific to the lighting module, across the rays of light and configured to project a beam of light, the support member (8) supporting the various lighting modules (3, 5, 7) being, on the one hand, secured to a closure element (23) incorporating at least two optical systems (13) and, on the other hand, connected to at least a first adjusting system (29) allowing one of the lighting modules (3, 5, 7) to be moved independently with respect to at least the other lighting module (3, 5, 7), **characterized in that** the support member (8) takes the form of an open housing equipped with opaque side walls (83) and covered by a protective window (39), the protective window (39) being the closure element (23) and made of a transparent and optically neutral first material, and the protective window comprising at least the optical systems (13) of at least two distinct lighting modules (3, 5, 7), the optical systems (13) consisting of thin projection lenses made from a second material distinct from the first material of the protective window (39).

2. The lighting device (1) as claimed in claim 1, wherein the first adjusting system (29) for at least one of the lighting modules (3, 5, 7) comprises translational-guidance means (47, 50) guiding the lighting module in a translational movement with respect to the support member along an axis perpendicular to the corresponding optical axis (100).

3. The lighting device (1) as claimed in claim 2, wherein each lighting module (3, 5, 7) is mounted on the support member (8) via a first adjusting system (29) comprising translational-guidance means (47, 50) guiding the lighting module with respect to the support member, the lighting device being configured so that the translational-guidance means are oriented in different directions.

4. The lighting device (1) as claimed in one of claims 2 or 3, wherein each first adjusting system (29) comprises, in addition to the translational-guidance means (47, 50) guiding the lighting module with respect to the support member, on the one hand, position-stop means (65, 66, 67) and adjusting means (55, 57) for adjusting the translational movement of the lighting module.

5. The lighting device (1) as claimed in the preceding claim, wherein the position-stop means and the adjusting means comprise at least one oblong element and a circular element which are formed respectively on one or the other of the lighting module (3, 5, 7) and the support member (8) and positioned facing one another, the oblong element (67) of the position-stop means extending in a direction substantially perpendicular to the direction in which the oblong element (57) of the adjusting means extends.

6. The lighting device (1) as claimed in one of claims 4 or 5, wherein the first adjusting system(s) (29) are configured so that the translational-guidance means are inside a first volume (27) defined by the support member (8) and the closure element (23), and so that the position-stop means and the adjusting means respectively comprise a binding screw (66) or a tool (49) passing through a base (26) of the support member (8).

7. The lighting device (1) as claimed in one of the preceding claims, wherein the position of the support member (8) is adjusted by a second adjusting system (31), said second adjusting system (31) being configured to simultaneously adjust the position of the various lighting modules (3, 5, 7).

8. The lighting device (1) as claimed in the preceding claim, wherein the second adjusting system (31) is configured to move the support member (8) in a rotational movement about a first axis of pivoting (600) or about a second axis of pivoting (700), the first axis of pivoting (600) and the second axis of pivoting (700) being substantially perpendicular to the optical axis (100) and substantially perpendicular to one another.

9. The lighting device (1) as claimed in any one of claims lto 8, **characterized in that** each lighting module comprises a collector (11) in the direction of which the light source (9) emits its rays, said collector (11) being equipped with a reflective surface (19) configured to deflect the rays of light emitted by the light source (9) in the direction of the optical system (13).

10. The lighting device (1) as claimed in the preceding claim, **characterized in that** the optical system (13) is configured to project an image of the reflective surface (19) of the collector (11).

11. The lighting device (1) as claimed in the preceding claim, **characterized in that** the collector (11) has an end edge in the vicinity of the light source (9) with a specific profile which contributes to giving the projected image an appropriate profile, and notably an appropriate cut-off, for performing a desired optical function.

12. The lighting device (1) as claimed in the preceding claim, **characterized in that** the end edge of the collector (11) is cut off in such a way as to exhibit a staircase profile.

13. The lighting device (1) as claimed in one of claims 9 to 12, **characterized in that** the collector (11) has an elliptical or parabolic shape.

14. A motor vehicle comprising at least one lighting device (1) as claimed in any one of the preceding claims, formed on the front face and/or on the rear face of the motor vehicle.
